# NEUE EUROPÄISCHE PATENTSCHRIFT

(11) **EP 0 090 908 B2**
(45) Veröffentlichungstag und Bekanntmachung des Hinweises auf die Entscheidung über den Einspruch: **16.08.1995**
(45) Hinweis auf die Patenterteilung: 27.08.1986
(21) Anmeldenummer: 83100272.0
(22) Anmeldetag: 14.01.1983
(51) Int. Cl.: B60T 15/18

(54) **Bremsdruck-Steuerventil**
Pilot valve for pressure brakes
Valve-pilote pour freins à pression

(30) Priorität: 19.03.1982 DE 3210027
(43) Veröffentlichungstag der Anmeldung: 12.10.1983
(73) Patentinhaber: WABCO Westinghouse Fahrzeugbremsen GmbH, D-30453 Hannover (DE)
(72) Erfinder: Deike, Karl-Heinz, D-3017 Pattensen (DE); Schulz, Hans-Joachim, D-3002 Wedemark (DE); Sandmann, Jürgen, D-3015 Wennigsen 5 (DE)
(74) Vertreter: Schrödter, Manfred, Dipl.-Ing.

(56) Entgegenhaltungen:
- DE-A- 1 755 021
- DE-A- 2 722 524
- DE-A- 2 814 421
- DE-B- 1 958 808
- DE-B- 2 446 201
- DE-U- 1 991 358
- US-A- 3 770 019
- Werkzeichnung Gerät Nr.97300260100 Der Firma WABCO Fahrzeugbremsen GmbH

## Beschreibung

Die Erfindung betrifft ein Bremsdruck-Steuerventil für druckluftbetätigte Fahrzeugbremsanlagen, insbesondere Anhänger-Steuerventil, gemäss dem Oberbegriff des Patentanspruchs 1.

Anhänger-Steuerventile dienen zur Steuerung des Druckes einer Anhänger-Bremsanlage in Abhängigkeit vom Druck in der Bremsanlage des Motorfahrzeugs.

Die Drucksteuerung erfolgt in der Weise, dass die durch Betätigung des Motorwagen-Bremsventils in eine Steuerkammer des Anhänger-Steuerventils einströmende Druckluft einen mit einem kombinierten Einlass- und Auslassventil in Wirkverbindung stehenden Relaiskolben abwärts bewegt, wodurch zunächst ein Schliessen des mit einem Entlüftungsanschluss in Verbindung stehenden Auslassventils bewirkt wird. Bei der weiteren Abwärtsbewegung des Relaiskolbens wird das zwischen einer Einlasskammer und einer Arbeitskammer angeordnete Einlassventil in die Offenstellung gebracht. Die von einem Druckluft-Vorratsbehälter gelieferte, in der Einlasskammer anstehende Druckluft gelangt durch die Arbeitskammer sowie eine zu einem Anhänger-Bremsventil der Anhänger-Bremsanlage führende Druckmittelleitung in die Steuerkammer des Anhänger-Bremsventils. Wenn der ausgesteuerte Druck eine vom Steuerdruck und von den Wirkflächen des Relaiskolbens abhängige Höhe erreicht hat, wird der Relaiskolben vom Druck in der Arbeitskammer aufwärtsbewegt und das Einlassventil geschlossen. Das Anhänger-Steuerventil befindet sich in Abschlussstellung. Wird der Steuerdruck weggenommen, so überwiegt der auf den Relaiskolben einwirkende ausgesteuerte Druck und verschiebt den Relaiskolben weiter nach oben. Das Auslassventil öffnet und der Druck aus der Steuerkammer des nachgeschalteten Anhänger-Bremsventils sowie der zum Anhänger-Bremsventil führenden Druckmittelleitung wird über den Entlüftungsanschluss des Anhänger-Steuerventils abgebaut.

Anhänger-Steuerventile weisen vielfach eine Einrichtung auf, welche einen gegenüber dem Motorfahrzeug schnelleren Aufbau des Bremsdruckes in den Radbremszylindern des Anhängers bewirkt (Voreilung). Aufgrund des schnelleren Bremsdruckaufbaus in den Radbremszylindern des Anhängers bleiben Motorfahrzeug und Anhänger auch bei einer Schnellbremsung gestreckt.

Aus dem Lieferprogramm der Firma WABCO Fahrzeugbremsen GmbH ist ein Bremsdruck-Steuerventil für druckluftbetätigte Fahrzeugbremsanlagen, insbesondere Anhänger-Steuerventil, mit der Gerätenummer 973 002 601.0 bekannt, welches die folgenden Merkmale aufweist:
a) es ist ein von einem Steuerdruck beaufschlagter Relaiskolben zur Betätigung eines ersten kombinierten Einlass- und Auslassventils für die Verbindung einer Arbeitskammer sowie eines mit dieser verbundenen Druckmittelausgangs mit einer Druckmittel-Einlasskammer oder mit einem Entlüftungsanschluß vorgesehen;
b) diejenige Kolbenfläche des Relaiskolbens, die der vom Steuerdruck in einer Steuerkammer beaufschlagten Kolbenfläche gegenüberliegt, ist geteilt, wobei die so gebildete erste Teilfläche des Relaiskolbens vom ausgesteuerten Druck in der Arbeitskammer beaufschlagt ist, während die zweite Teilfläche des Relaiskolbens von dem in einer Hilfssteuerkammer herrschenden Druck beaufschlagt ist;
c) in dem Relaiskolben ist ein von einem Betätigungskolben betätigtes zweites kombiniertes Einlass- und Auslassventil vorgesehen;
d) der Betätigungskolben ist in Öffnungsrichtung des Einlassventils des zweiten kombinierten Einlass- und Auslassventils von dem Druck in der Arbeitskammer und in Gegenrichtung von einer Feder beaufschlagt;
e) der Betätigungskolben trägt einen der Bildung des Einlassventils des zweiten kombinierten Einlass- und Auslassventils dienenden Ventilsitz;
f) die Hilfssteuerkammer und die die Hilfssteuerkammer begrenzende Teilfläche des Relaiskolbens sind so angeordnet, daß die Kraft des Druckes in der Hilfssteuerkammer der Kraft des Steuerdruckes in der Steuerkammer entgegengerichtet ist;
g) die Hilfssteuerkammer ist über das zweite kombinierte Einlass- und Auslassventil be- und entlüftbar, wobei das Einlassventil des zweiten kombinierten Einlass- und Auslassventils zur Beaufschlagung der Hilfssteuerkammer mit einem vom Steuerdruck abhängigen Druck dient.

Bei diesem Bremsdruck-Steuerventil ist zur Erzielung der Voreilung die Hilfssteuerkammer vorgesehen, die von einer Abstufung des Relaiskolbens begrenzt wird. Über das zweite kombinierte Einlass- und Auslassventil ist die Hilfssteuerkammer mit der Arbeitskammer des Anhänger-Steuerventils verbindbar. Bei Druckbeaufschlagung des Relaiskolbens mit Steuerdruck wird der Relaiskolben in Richtung auf die Arbeitskammer zu verschoben. Dabei schließt das die Arbeitskammer mit der Atmosphäre verbindende Auslassventil des ersten kombinierten Einlass- und Auslassventils und das die Steuerkammer eines nachgeschalteten Anhänger-Bremsventils mit einem Druckluft-Vorratsbehälter verbindende Einlassventil öffnet. Der sich in der Arbeitskammer aufbauende Druck beaufschlagt die dem Steuerdruck entgegengerichtete Wirkfläche des Relaiskolbens. Gleichzeitig wird der Betätigungskolben des zweiten kombinierten Einlass- und Auslassventils, der zugleich dessen Ventilkörper ist, in Öffnungsrichtung des Einlassventils von demselben Druck beaufschlagt. Ist der Druck in der Arbeitskammer soweit angestiegen, daß er die Kraft der den Betätigungskolben belastenden Feder überwindet, öffnet das Einlassventil und in die Hilfssteuerkammer wird Druck aus der Arbeitskammer eingesteuert. Die dem Steuerdruck entgegengerichtete, die Hilfssteuerkammer begrenzende Wirkfläche des Relaiskolbens wird mit einem gegenüber dem Druck aus der Arbeitskammer reduzierten Druck beaufschlagt. Durch das Zuschalten der durch die Abstufung des Relaiskolbens gebildeten, ebenfalls vom Ausgangsdruck beaufschlagten Wirkfläche und das dadurch geänderte Flächenverhältnis erfolgt die Druckeinsteuerung in das nachgeschaltete Anhänger-Bremsventil somit gemäß einer Kennlinie, die anfangs relativ steil und nach Öffnen des Einlaßventils des zweiten kombinierten Einlass- und Auslassventils flacher verläuft.

Es ist bekannt, daß ein solches Bremsdruck-Steuerventil das gleiche Ergebnis erbringt, wenn der Druck in der Hilfssteuerkammer statt von dem Druck in der Arbeitskammer von dem Steuerdruck abgezweigt wird und der Betätigungskolben des zweiten kombinierten Einlass- und Auslassventils zu diesem Zweck statt von dem Druck in der Arbeitskammer von dem Steuerdruck beaufschlagt wird.

Das Auslassventil des zweiten kombinierten Einlass- und Auslassventils ist als Rückschlagventil ausgebildet, welches in der Richtung von der Hilfssteuerkammer zur Arbeitskammer durchlässig ist und die Gegenrichtung sperrt.

Wird zwecks Bremsdruckabbaus in den Radbremszylindern der Steuerdruck weggenommen, so wird der Relaiskolben vom Druck aus der Arbeitskammer und der Hilfssteuerkammer in Richtung auf die Steuerkammer zu verschoben. Das Einlassventil des ersten kombinierten Einlass- und Auslassventils schließt, das Auslassventil öffnet und die Steuerkammer des Anhänger-Bremsventils wird über die Arbeitskammer und den Entlüftungsanschluß des Anhänger-Steuerventils zur Atmosphäre hin entlüftet. Infolge der vorstehend erwähnten Ausbildung des Auslassventils des zweiten kombinierten Einlass- und Auslassventils öffnet dieses Auslassventil sich erst, wenn der Druck in der Arbeitskammer des Anhänger-Steuerventils auf den Druck in der Hilfssteuerkammer abgefallen ist. Nach dem Öffnen dieses Auslassventils wird der Druck in der Hilfssteuerkammer über die Arbeitskammer abgebaut. Der Abbau des Druckes in der Hilfssteuerkammer und in der Arbeitskammer erfolgt im Verhältnis 1 : 1 zum Abbau des Druckes in der Steuerkammer.

Der zum Öffnen des Auslassventils des zweiten kombinierten Einlass- und Auslassventils erforderliche vorherige Druckabfall in der Arbeitskammer hat zur Folge, daß der Bremsdruckabbau nach einer von der Kennlinie des Bremsdruckaufbaus abweichenden Kennlinie verläuft.

Die Folge ist eine relativ grosse Hysterese des Anhänger-Steuerventils, woraus wiederum eine Beeinträchtigung des Ansprechverhaltens des Bremsdruck-Steuerventils resultiert.

Der Erfindung liegt deshalb die Aufgabe zugrunde, ein Bremsdruck-Steuerventil, insbesondere Anhänger-Steuerventil zu schaffen, welches eine gegenüber den bekannten Bremsdruck-Steuerventilen geringere Hysterese aufweist.

Diese Aufgabe wird mit der im Patentanspruch 1 angegebenen Erfindung gelöst. Vorteilhafte Weiterbildungen und Ausgestaltungen der Erfindung werden in den Unteransprüchen aufgezeigt.

Die Erfindung bietet insbesondere den Vorteil, dass durch die direkte Entlüftung der Hilfssteuerkammer zur Atmosphäre die Hysterese erheblich reduziert und dadurch das Ansprechverhalten des Bremsdruck-Steuerventils erheblich verbessert wird.

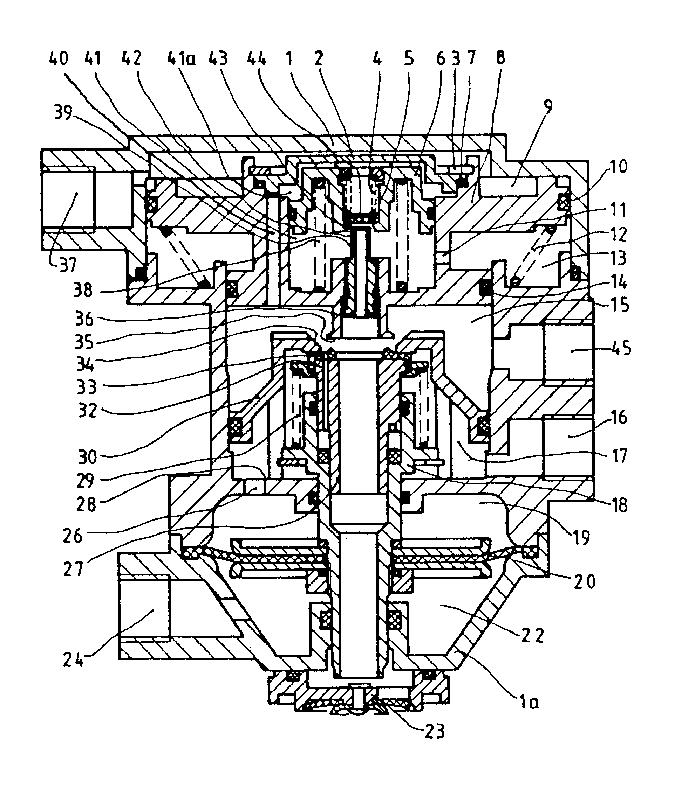

Anhand der Zeichnung wird ein Ausführungsbeispiel der Erfindung nachstehend näher erläutert.

Die Zeichnung zeigt ein Anhänger-Steuerventil für eine Zweileitungs-Anhängerbremsanlage mit einem kombinierten Einlass- und Auslassventil zur Steuerung der Voreilung, wobei das Auslassventil der kombinierten Einlass- und Auslassventileinrichtung direkt mit dem zur Atmosphäre führenden Entlüftungsanschluss des Anhänger-Steuerventils verbunden ist.

Das Zweileitungs-Anhänger-Steuerventil besteht aus einem Gehäuseoberteil 1 und einem Gehäuseunterteil 1a, an dessen Unterseite eine Entlüftung 23 angeordnet ist. Ein im Gehäuseoberteil 1 angeordneter Relaiskolben 8 begrenzt mit seiner oberen Wirkfläche eine Steuerkammer 9, während der Steueranschluss 37 mit einer nicht dargestellten Bremsleitung der Motorwagen-Bremsanlage verbunden ist. Eine untere Wirkfläche des Relaiskolbens 8 begrenzt eine Arbeitskammer 15, die über einen Druckmittelausgang 45 mit einer zu einem Anhänger-Bremsventil führenden Druckmittelleitung verbunden ist. Die untere Wirkfläche des Relaiskolbens 8, welche die Arbeitskammer 15 begrenzt, ist durch eine Abstufung des Relaiskolbens 8 geteilt, wobei die so gebildete erste Teilfäche des Relaiskolbens 8, wird bereits gesagt, die Arbeitskammer 15 begrenzt, während die zweite Teilfäche des Relaiskolbens 8 als Begrenzung für eine Hilfssteuerkammer 13 dient. Der Relaiskolben 8 weist zwei in Umfangsrichtung verlaufende Dichtringe 10 und 14 auf, welche dichtend an der Gehäusewandung anliegen. Der Dichtring 10 dichtet die Steuerkammer 9 gegen die Hilfssteuerkammer 13 ab, und der Dichtring 14 dichtet die Arbeitskammer 15 gegen die Hilfssteuerkammer 13 ab. Das untere Gehäuseteil 1a ist gegen das obere Gehäuseteil 1 durch einen mit einer in Richtung seiner Längsachse verlaufenden Ausnehmung 34 versehenen Kolben 30 abgeschlossen. Der Kolben 30 trennt eine mit einem Druckmitteleinlass 16 verbundene Druckmitteleinlasskammer 17 von der Arbeitskammer 15. Der die Ausnehmung 34 des Kolbens 30 begrenzende Randbereich ist als Einlassventilsitz 33 des Einlassventils eines ersten kombinierten Einlass- und Auslassventils ausgebildet. Mit dem Einlassventilsitz 33 wirkt ein Doppelventilkörper 32 zusammen, der auf seiner dem Einlassventilsitz 33 abgewandten Seite einen hülsenförmigen Fortsatz 27 aufweist. Der mit dem Doppelventilkörper 32 verbundene hülsenformige Fortsatz 27 wird in einem abgestuften Rohr 18 abgedichtet geführt und mittels einer sich auf einem umlaufenden Vorsprung des Rohres 18 abstützenden Druckfeder 29 am Einlassventilsitz 33 zur Anlage gebracht. Das Rohr 18 wird einerseits in einer im unteren Gehäuseteil vorgesehenen ringförmigen Stirnwand 28, welche die Druckmitteleinlasskammer 17 von einer Hilfsarbeitskammer 19, 22 trennt, und andererseits in einer im Boden des unteren Gehäuseteiles 1a angeordneten Öffnung abgedichtet geführt. Die Hilfsarbeitskammer 19, 22 ist durch einen Membrankolben 20 in zwei Teilkammern 19 und 22 unterteilt. Über einen in der Stirnwand 28 vorgesehenen Kanal 26 ist die erste Teilkammer 19 mit der Druckmitteleinlasskammer 17 verbunden. Die zweite Teilkammer 22 steht über einen Druckmittelanschluss 24 mit einem zweiten Bremskreis der Bremsanlage in Verbindung. Der Relaiskolben 8 weist auf seiner der Arbeitskammer 15 zugewandten Seite einen Hohlstössel 36 auf, der in die Ausnehmung 34 des Kolbens 30 hineinragt und mit seinem als Auslassventilsitz 35 ausgebildeten freien Ende mit dem Doppelventilkörper 32 das Auslassventil 35, 32 des ersten kombinierten Einlass- und Auslassventils 32, 33, 35 bildet. Über das erste kombinierte Einlass- und Auslassventil 32, 33, 35 ist die Arbeitskammer 15 be- und entlüftbar. Der Hohlstössel 36 besitzt einen Einsatz 39, der sich in eine aus zwei Teilkammern 41 und 41a bestehende Kammer des Relaiskolbens 8 hinein erstreckt und an seinem in die Teilkammer 41 hineinragenden Ende als Auslassventilsitz 42 für ein zweites kombiniertes Einlass- und Auslassventil ausgebildet ist. Ein Betätigungskolben 6, der gegen die Kraft einer Feder 38 in Richtung auf den als Hohlstössel dienenden Einsatz 39 zu verschiebbar in der Kammer 41, 41a angeordnet ist, trennt die beiden Teilkammern 41, 41a voneinander. Der Betätigungskolben 6 weist eine zentrisch angeordnete Ausnehmung 5 auf, die einen sich radikal nach innen erstreckenden, als Einlassventilsitz 43 ausgebildeten umlaufenden Vorsprung besitzt. Auf dem Einlassventilsitz 43 liegt ein durch eine Feder 4 belasteter Doppelventilkörper 44 auf, der zusammen mit dem Einlassventilsitz 43 das Einlassventil 43, 44 und mit dem Auslassventilsitz 42 das Auslassventil 42, 44 des zweiten kombinierten Einlass- und Auslassventils 42, 43, 44 bildet. Die Kammer 41, 41a des Relaiskolbens 8 ist mittels eines Deckels 2 und eines Dichtringes 7 druckdicht gegen die Steuerkammer 9 abgeschlossen. Der Deckel 2 wird von einem Sicherungsring 3 gehalten. Ein im Relaiskolben 8 vorgesehener Kanal 40 verbindet die Arbeitskammer 15 mit der Teilkammer 41a des Relaiskolbens 8. Eine im Relaiskolben 8 in radialer Richtung angeordnete Bohrung 11 verbindet die Hilfssteuerkammer 13 mit der Teilkammer 41. Mittels einer sich auf einem Absatz des Gehäuseoberteiles 1 abstützenden Kegelfeder 12 wird der Relaiskolben 8 in Richtung auf die Steuerkammer 9 zu belastet.

Die Funktion des erfindungsgemässen Bremsdruck-Steuerventils wird nachstehend näher erläutert.

In der gezeigten Stellung ist die Steuerkammer 9 drucklos und in der Druckmitteleinlasskammer 17 sowie in der Hilfsarbeitskammer 19 steht Vorratsdruck an. Wird das Motorwagen-Bremsventil vom Fahrer betätigt, so strömt Bremsdruck von einem ersten Betriebsbremskreis über den Steueranschluss 37 in die Steuerkammer 9. Der sich in der Steuerkammer 9 aufbauende Druck verschiebt den Relaiskolben 8 abwärts in Richtung auf die Arbeitskammer 15 zu. Dabei setzt der Auslassventilsitz 35 des ersten kombinierten Einlass- und Auslassventils 32, 33, 35 auf dem Doppelventilkörper 32 auf. Das Auslassventil 32, 35 ist jetzt geschlossen und die Verbindung von der Arbeitskammer 15 zur Atmosphäre unterbrochen. Bei der weiteren Abwärtsbewegung des Relaiskolbens 8 wird der Doppelventilkörper 32 vom Einlassventilsitz 33 abgehoben und so das Einlassventil 33, 32 des ersten kombinierten Einlass- und Auslassventils 32, 33, 35 in die Offenstellung gebracht. Von der Druckmitteleinlasskammer 17 strömt Vorratsdruckluft durch das geöffnete Einlassventil 33, 32 in die Arbeitskammer 15 und weiter durch den Druckmittelausgang zur Steuerkammer des Anhänger-Bremsventils des Anhänger-Fahrzeugs.

In der Steuerkammer des Anhänger-Bremsventils steigt der Druck mit einer gegenüber dem Druckanstieg in der Bremsanlage des Motorfahrzeugs steileren Steigung an. Gleichzeitig mit den Vorgängen am Steueranschluss 37 erfolgt vom zweiten Betriebsbremskreis über den Druckmittelanschluss 24 eine Belüftung der Hilfsarbeitskammer 22 unterhalb des Membrankolbens 20. Da jedoch durch Belüftung der Arbeitskammer 15 und der Hilfsarbeitskammer 19 der auf die Oberseiten des Kolbens 30 und des Membrankolbens 20 wirkende Druck überwiegt, verändert sich die Lage des Kolbens 30 nicht. Fällt durch einen Defekt der erste Betriebsbremskreis aus, so erfolgt über den zweiten Betriebsbremskreis nur eine Belüftung des Druckmittelanschlusses 24. Der dabei in der Hilfsarbeitskammer 22 unterhalb des Membrankolbens 20 sich aufbauende Druck bewegt den Kolben 30 nach oben. Dabei schliesst der in seiner oberen Endlage gehaltene Relaiskolben 8 das Auslassventil 32, 35 und öffnet das Einlassventil 32, 33, so dass die der Motorwagenbremsung entsprechende Belüftung der Anhänger-Bremsleitung stattfindet.

Durch den im Relaiskolben 8 angeordneten Kanal 40 gelangt aus der Arbeitskammer 15 Druckluft in die obere Teilkammer 41a des Relaiskolbens 8 und beaufschlagt die Wirkfläche des Betätigungskolbens 6. Ist der Druck in der Arbeitskammer 15 und somit auch in der Teilkammer 41a soweit angestiegen, dass die Kraft der den Betätigungskolben 6 belastenden, dem Druck in der Teilkammer 41a entgegengerichteten Kraft der Feder 38 überwunden wird, so bewegt sich der Betätigungskolben 6 abwärts in Richtung auf die Teilkammer 41 zu. Der Doppelventilkörper 44 setzt auf den Auslassventilsitz 42 auf. Das Auslassventil 42, 44 des zweiten kombinierten Einlass- und Auslassventils 42, 43, 44 ist jetzt geschlossen. Bei der weiteren Abwärtsbewegung des Betätigungskolbens 6 wird der Doppelventilkörper 44 vom Einlassventilsitz 43 abgehoben und so das Einlassventil 43, 44 des zweiten kombinierten Einlass- und Auslassventils 42, 43, 44 geöffnet. Durch das geöffnete Einlassventil 43, 44 sowie die Bohrung 11 gelangt die Vorratsdruckluft in die Hilfssteuerkammer 13 und beaufschlagt die zweite Teilfäche des Relaiskolbens 8. Die zweite, vom Vorratsdruck beaufschlagte Teilfläche und die erste, die Arbeitskammer 15 begrenzende Teilfäche des Relaiskolbens 8 bilden zusammen eine gemeinsame Wirkfläche, die der Grösse der entgegengerichteten, vom Steuerdruck beaufschlagten Wirkfläche des Relaiskolbens 8 entspricht. Ist der Druck in der Hilfssteuerkammer 13 und somit auch in der Teilkammer 41 soweit angestiegen, dass die vom Druck in der Teilkammer 41 sowie die von der Feder 38 auf den Betätigungskolben 6 ausgeübte Kraft gleich ist der Kraft der vom Druck in der Teilkammer 41a auf den Betätigungskolben 6 einwirkenden entgegengerichteten Kraft, gelangt das Einlassventil 43, 44 des zweiten kombinierten Einlass- und Auslassventils 42, 43, 44 in die Schliessstellung.

In der Steuerkammer des nachgeschalteten Anhänger-Bremsventils steigt der Druck jetzt mit einer Steigung weiter an, die parallel zur Steigung des Druckanstiegs in der Bremsanlage des Motorfahrzeugs verläuft.

Aufgrund der gegeneinander gerichteten gleichgrossen Wirkflächen des Relaiskolbens wird ein parallel zum Druckanstieg des Steuerdrucks (Bremsdruck des Motorfahrzeugs) verlaufender, jedoch um den Betrag der Voreilung erhöhter Druck ausgesteuert. Ist die aus den beiden Teilflächen gebildete Gesamtwirkfläche kleiner oder grösser als die entgegengerichtete, vom Steuerdruck beaufschlagte Wirkfläche ausgelegt, so wird ein höherer bzw. niedrigerer Druck ausgesteuert.

Soll der Bremsdruck in den Radbremszylindern des Anhänger-Fahrzeugs abgesenkt oder ganz abgebaut werden, so wird der Steuerdruck in der Steuerkammer 9 reduziert. Aufgrund der dabei entstehenden Druckdifferenz zwischen dem Druck in der Steuerkammer 9 und dem Druck in der Arbeitskammer 15 sowie der Hilfssteuerkammer 13 bewegt sich der Relaiskolben 8 nach oben in Richtung auf die Steuerkammer 9 zu. Der Auslassventilsitz 35 hebt vom Doppelventilkörper 32 ab, so dass sich das Auslassventil 32, 35 des ersten kombinierten Einlass- und Auslassventils 32, 33, 35 jetzt in der Offenstellung befindet. Die Arbeitskammer 15 des Anhänger-Steuerventils und somit auch die Steuerkammer des Anhänger-Bremsventils des Anhänger-Fahrzeugs werden über das Auslassventil 32, 35 und den Entlüftungsanschluss 23 zur Atmosphäre hin entlüftet.

Bedingt durch den Druckabbau in der Arbeitskammer 15 sinkt auch der Druck in der vom Betätigungskolben 6 begrenzten Teilkammer 41a des Relaiskolbens 8. Der Betätigungskolben 6 wird durch die dabei entstehende Druckdifferenz zwischen dem Druck in der Teilkammer 41 und dem Druck in der Teilkammer 41a sowie die Kraft der Feder 38 nach oben in Richtung auf die Teilkammer 41a zu verschoben, wodurch ein Abheben des Doppelventilkörpers 44 vom Auslassventilsitz 42 des zweiten kombinierten Einlass- und Auslassventils 42, 43, 44 bewirkt wird. Die Hilfssteuerkammer 13 wird über die Bohrung 11, die Teilkammer 41, das Auslassventil 42, 44 sowie den Einsatz 39 und den Entlüftungsanschluss 23 direkt zur Atmosphäre hin entlüftet.

Dadurch, dass die Hilfssteuerkammer 13 nicht mehr in Abhängigkeit vom Druckabbauverlauf in der Arbeitskammer 15, sondern direkt zur Atmosphäre hin entlüftet wird, und dadurch, dass der Druckabbau in der Hilfssteuerkammer 13 in Abhängigkeit gebracht wird von der Kraft der die Voreilung beeinflussenden Feder 38, zeigt die Druckabbau-Kennlinie im wesentlichen den gleichen Verlauf wie die Druckaufbau-Kennlinie. Dies bedeutet eine Verringerung der Hysterese des Anhänger-Steuerventils.

Es ist selbstverständlich auch möglich, die Hilfssteuerkammer 13 nicht mit dem Versorgungsdruck aus der Arbeitskammer 15, sondern mit dem Steuerdruck aus der Steuerkammer 9 zu beaufschlagen. Zu diesem Zweck wird der die Kammer 41, 41a des Relaiskolbens 8 verschliessende Deckel 2 entfernt und der die Arbeitskammer 15 mit der Kammer 41, 41a verbindende Kanal verschlossen.

Der im Hohlstössel 36 des Relaiskolbens 8 angeordnete Einsatz 39 ist in Richtung seiner Längsachse verstellbar, so dass der vom Betätigungskolben 6 zur Betätigung des Einlass- bzw. Auslassventils des zweiten kombinierten Einlass- und Auslassventils 42, 43, 44 zurückzulegende Weg und somit auch die Vorspannung der Feder 38 veränderbar ist.

Durch diese Massnahme kann die Voreilung des Bremsdruckaufbaues in den Radbremszylindern des Anhängerfahrzeugs gegenüber dem Bremsdruckaufbau in den Radbremszylindern des Motorfahrzeugs auf jeden gewünschten Wert eingestellt werden.

## Patentansprüche

1. Bremsdruck-Steuerventil für druckluftbetätigte Fahrzeugbremsanlagen, insbesondere Anhänger-Steuerventil, welches die folgenden Merkmale aufweist:
a) es ist ein von einem Steuerdruck beaufschlagter Relaiskolben (8) zur Betätigung eines ersten kombinierten Einlass- und Auslassventils (32, 33, 35) für die Verbindung einer Arbeitskammer (15) sowie eines mit dieser verbundenen Druckmittelausgangs (45) mit einer Druckmittel-Einlasskammer (17) oder mit einem Entlüftungsanschluß (23) vorgesehen;
b) diejenige Kolbenfläche des Relaiskolbens (8), die der vom Steuerdruck in einer Steuerkammer (9) beaufschlagten Kolbenfläche gegenüberliegt, ist geteilt, wobei die so gebildete erste Teilfläche des Relaiskolbens (8) vom ausgesteuerten Druck in der Arbeitskammer (15) beaufschlagt ist, während die zweite Teilfläche des Relaiskolbens (8) von dem in einer Hilfssteuerkammer (13) herrschenden Druck beaufschlagt ist;
c) in dem Relaiskolben (8) ist ein von einem Betätigungskolben (6) betätigtes zweites kombiniertes Einlass- und Auslassventil (42, 43, 44) vorgesehen;
d) der Betätigungskolben (6) ist in Öffnungsrichtung des Einlassventils (43, 44) des zweiten kombinierten Einlass- und Auslassventils (42, 43, 44) von dem Steuerdruck oder dem Druck in der Arbeitskammer (15) und in Gegenrichtung von einer Feder (38) beaufschlagt;
e) der Betätigungskolben (6) trägt einen der Bildung des Einlassventils (43, 44) des zweiten kombinierten Einlass- und Auslassventils (42, 43, 44) dienenden Ventilsitz (43);
f) die Hilfssteuerkammer (13) und die die Hilfssteuerkammer (13) begrenzende Teilfläche des Relaiskolbens (8) sind so angeordnet, daß die Kraft des Druckes in der Hilfssteuerkammer (13) der Kraft des Steuerdruckes in der Steuerkammer (9) entgegengerichtet ist;
g) die Hilfssteuerkammer (13) ist über das zweite kombinierte Einlass- und Auslassventil (42, 43, 44) be- und entlüftbar, wobei das Einlassventil (43, 44) des zweiten kombinierten Einlass- und Auslassventils (42, 43, 44) zur Beaufschlagung der Hilfssteuerkammer (13) mit einem vom Steuerdruck abhängigen Druck dient,
h) das zweite Einlass- und Auslassventil (42, 43, 44) weist einen vom Betätigungskolben (6) getrennten Ventilkörper (44) auf, der mit dem am Betätigungskolben (6) angeordneten Ventilsitz (43) das Einlassventil (43, 44) und mit einem am Relaiskolben (8) angeordneten Ventilsitz (42) das Auslassventil (42, 44) bildet;
i) vom Ventilsitz (42) am Relaiskolben (8) geht zur Entlüftung der Hilfssteuerkammer (13) eine Verbindung direkt zur Atmosphäre aus.

2. Bremsdruck-Steuerventil nach Anspruch 1,
gekennzeichnet durch die folgenden Merkmale:
a) der Relaiskolben (8) weist eine erste Teilkammer (41) und eine zweite Teilkammer (41a) auf, welche durch den Betätigungskolben (6) voneinander getrennt sind;
b) im Boden der ersten Teilkammer (41) ist ein als Hohlstössel (36) ausgebildeter, sich sowohl in Richtung auf die Teilkammer (41) zu als auch in Richtung auf die Arbeitskammer (15) zu erstreckender Fortsatz vorgesehen, der auf seiner der Arbeitskammer (15) zugewandten Seite als Auslassventilsitz (35) für das Auslassventil (33, 35) des ersten kombinierten Einlass- und Auslassventils (32, 33, 35) und auf seiner sich in die erste Teilkammer (41) hinein erstreckenden Seite als der Ventilsitz (42) für das Auslassventil (42, 44) des zweiten kombinierten Einlass- und Auslassventils (42, 43, 44) ausgebildet ist;
c) in einer Ausnehmung (5) des Betätigungskolbens (6) ist ein umlaufender Vorsprung vorgesehen, der als der Ventilsitz (43) für das Einlassventil (43, 44) des zweiten kombinierten Einlass- und Auslassventils (42, 43, 44) ausgebildet ist;
d) auf dem Ventilsitz (43) für das Einlassventil (43, 44) liegt der von einer Feder (4) belastete Doppelventilkörper (44) auf;
e) das Einlassventil (43, 44) ist durch eine Bewegung des Betätigungskolbens (6) in Richtungauf den Hohlstössel (36) zu in die Offenstellung und das Auslassventll (42, 44) in die Schließstellung bringbar;
f) in der ersten Teilkammer (41) ist die Feder (38) angeordnet, welche sich einerseits am Boden der ersten Teilkammer (41) und andererseits am Betätigungskolben (6) abstützt;
g) die zweite Teilkammer (41a) ist über einen Kanal (40) mit der Arbeitskammer (15) verbunden;
h) die erste Teilkammer (41) ist über eine Bohrung (11) mit der Hilfssteuerkammer (13) verbunden;
i) die erste Teilkammer (41) ist über das Auslassventil (42, 44) mit dem Entlüftungsanschluß (23) des Bremsdruck-Steuerventils verbindbar.

3. Bremsdruck-Steuerventil nach Anspruch 2, dadurch gekennzeichnet, daß im Hohlstössel (36) ein mit einer in Richtung seiner Längsachse verlaufenden Bohrung versehener Einsatz (39) in Richtung seiner Längsachse verstellbar angeordnet ist.

## Claims

1. Brake-pressure control valve for pneumatically operated vehicle brake units, especially a control valve for a trailer, having the following features:
a) a relay piston (8), to which control pressure is applied, for activating a first combined inlet and outlet valve (32, 33, 35) for connecting a working chamber (15) and a pressure-medium outlet (45) connected to the working chamber (15) to a pressure-medium inlet chamber (17), or to a venting connection (23), is provided;
b) that surface of the relay piston (8) that is opposite the surface to which control pressure is applied in a control chamber (9) is divided, the first part of the surface of the relay piston (8) formed in this manner being subjected to the controlled pressure in the working chamber (15), while the second part of the surface of the relay piston (8) is subjected to the pressure prevailing in an auxiliary control chamber (13);
c) a second combined inlet and outlet valve (42, 43, 44) activated by an activating piston (6) is provided in the relay piston (8);
d) the activating piston (6) is subjected in the opening direction of the inlet valve (43, 44) of the second combined inlet and outlet valve (42, 43, 44) to the control pressure or to the pressure in the working chamber (15) and is acted on in the opposite direction by a spring (38);
e) the activating piston (6) carries a valve seat (43) that serves to form the inlet valve (43, 44) of the second combined inlet and outlet valve (42, 43, 44);
f) the auxiliary control chamber (13) and the part of the surface of the relay piston (8) that bounds the auxiliary control chamber (13) are arranged in such a manner that the force of the pressure in the auxiliary control chamber (13) opposes the force of the control pressure in the control chamber (9);
g) the auxiliary control chamber (13) can be pressurised and vented by way of the second combined inlet and outlet valve (42, 43, 44), the inlet valve (43, 44) of the second combined inlet and outlet valve (42, 43, 44) serving to apply pressure dependent on the control pressure to the auxiliary control chamber (13);
h) the second inlet and outlet valve (42, 43, 44) has a valve body (44) which is separate from the activating piston (6) and which with the valve seat (43) arranged on the activating piston (6) forms the inlet valve (43, 44) and with a valve seat (42) arranged on the relay piston (8) forms the outlet valve (42, 44), and
i) for venting the auxiliary control chamber (13) there is a connection directly to the atmosphere from the valve seat (42) on the relay piston (8).

2. Brake-pressure control valve according to claim 1, characterised by the following features:
a) the relay piston (8) has a first partial chamber (41) and a second partial chamber (41a) which are separated from one another by the activating piston (6);
b) in the base of the first partial chamber (41) there is provided an extension designed as a hollow tappet (36) which extends both in the direction towards the partial chamber (41) and in the direction towards the working chamber (15), which extension, on the side facing the working chamber (15), is shaped as an outlet-valve seat (35) for the outlet valve (33, 35) of the first combined inlet and outlet valve (32, 33, 25) and, on the side that extends into the first partial chamber (41), is shaped as the valve seat (42) for the outlet valve (42, 44) of the second combined inlet and outlet valve (42, 43, 44);
c) in a recess (5) in the activating piston (6) there is provided a circumferential projection which is shaped as the valve seat (43) for the inlet valve (43, 44) of the second combined inlet and outlet valve (42, 43, 44);
d) on the valve seat (43) for the inlet valve (43, 44) rests the double-valve body (44) loaded by a spring (4);
e) by a movement of the activating piston (6) in the direction towards the hollow tappet (36) the inlet valve (43, 44) can be brought into the open position and the outlet valve (42, 44) into the closed position;
f) arranged in the first partial chamber (41) is the spring (38) which is supported on one side on the floor of the first partial chamber (41) and on the other side on the activating piston (6);
g) the second partial chamber (41a) is connected by way of a channel (40) to the working chamber (15);
h) the first partial chamber (41) is connected by way of a bore (11) to the auxiliary control chamber (13); and
i) the first partial chamber (41) can be connected by way of the outlet valve (42, 44) to the venting connection (23) of the brake-pressure control valve.

3. Brake-pressure control valve according to claim 2, characterised in that an insert (39) provided with a bore extending in the direction of its longitudinal axis is arranged in the hollow tappet (36) in such a manner that it is adjustable in the direction of its longitudinal axis.

## Revendications

1. Soupape de commande de la pression de freinage pour installations de freinage de véhicule actionnées par l'air comprimé, en particulier soupape de commande de remorque, qui présente les caractéristiques suivantes :
a) il est prévu un piston relais (8) chargé par une pression de commande et destiné à actionner une première soupape combinée d'admission et d'échappement (32, 33, 35) servant à relier une chambre de travail (15) et une sortie de fluide sous pression (45) reliée à celle-ci à une chambre d'admission de fluide sous pression (17) ou à un raccord d'échappement d'air (23);
b) la surface du piston relais (8) qui est à l'opposé de la surface de piston chargée par la pression de commande régnant dans une chambre de commande (9) est divisée, la première surface partielle du piston relais (8) ainsi formée étant chargée par la pression modulée régnant dans la chambre de travail (15), tandis que la deuxième surface partielle du piston relais (8) est chargée par la pression régnant dans une chambre de commande auxiliaire (13);
c) il est prévu dans le piston relais (8) une deuxième soupape combinée d'admission et d'échappement (42, 43, 44) actionnée par un piston d'actionnement (6);
d) le piston d'actionnement (6) est chargé dans le sens d'ouverture de la soupape d'admission (43, 44) de la deuxième soupape combinée d'admission et d'échappement (42, 43, 44) par la pression de commande ou la pression régnant dans la chambre de travail (15) et dans le sens opposé par un ressort (38);
e) le piston d'actionnement (6) porte un siège de soupape (43) servant à former la soupape d'admission (43, 44) de la deuxième soupape combinée d'admission et d'échappement (42, 43, 44);
f) la chambre de commande auxiliaire (13) et la surface partielle du piston relais (8) qui limite la chambre de commande auxiliaire (13) sont agencées de telle manière que la force de la pression régnant dans la chambre de commande auxiliaire (13) est de sens opposé à la force de la pression de commande régnant dans la chambre de commande (9);
g) la chambre de commande auxiliaire (13) peut être alimentée en air et mise à l'échappement par l'intermédiaire de la deuxième soupape combinée d'admission et d'échappement (42, 43, 44), la soupape d'admission (43, 44) de la deuxième soupape combinée d'admission et d'échappement (42, 43, 44) servant à charger la chambre de commande auxiliaire (13) à une pression qui dépend de la pression de commande,
h) la deuxième soupape d'admission et d'échappement (42, 43, 44) comporte un clapet (44) séparé du piston d'actionnement (6), qui constitue avec le siège de soupape (43) agencé sur le piston d'actionnement (6) la soupape d'admission (43, 44) et avec un siège de soupape (42) agencé sur le piston relais (8) la soupape d'échappement (42, 44);
i) une liaison conduit directement à l'atmosphère depuis le siège de soupape (42) sur le piston relais (8) pour la mise à l'échappement de la chambre de commande auxiliaire (13).

2. Soupape de commande de la pression de freinage selon la revendication 1, caractérisée par les particularités suivantes :
a) le piston relais (8) comprend une première chambre partielle (41) et une deuxième chambre partielle (41a) qui sont séparées l'une de l'autre par le piston d'actionnement (6);
b) dans le fond de la première chambre partielle (41) est prévu un prolongement, constituant un poussoir creux (36), qui est destiné à s'étendre aussi bien vers la chambre partielle (41) que vers la chambre de travail (15) et qui, sur sa face dirigée vers la chambre de travail (15), constitue un siège de soupape d'échappement (35) pour la soupape d'échappement (33, 35) de la première soupape combinée d'admission et d'échappement (32, 33, 35), tandis que, sur sa face qui s'étend dans la première chambre partielle (41), il constitue le siège de soupape (42) pour la soupape d'échappement (42, 44) de la deuxième soupape combinée d'admission et d'échappement (42, 43, 44);
c) dans un évidement (5) du piston d'actionnement (6) est prévue une saillie circonférentielle qui constitue le siège de soupape (43) pour la soupape d'admission (43, 44) de la deuxième soupape combinée d'admission et d'échappement (42, 43, 44);
d) sur le siège de soupape (43) pour la soupape d'admission (43, 44) est appuyé un clapet double (44) chargé par un ressort (4);
e) la soupape d'admission (43, 44) peut être amenée dans la position d'ouverture par un déplacement du piston d'actionnement (6) vers le poussoir creux (36) et la soupape d'échappement (42, 44) peut être amenée dans la position de fermeture par ce même déplacement;
f) dans la première chambre partielle (41) est disposé le ressort (38) qui prend appui, d'une part, sur le fond de la première chambre partielle (41) et, d'autre part, sur le piston d'actionnement (6);
g) la deuxième chambre partielle (41a) est reliée à la chambre de travail (15) par un canal (40);
h) la première chambre partielle (41) est reliée à la chambre de commande auxiliaire (13) par un perçage (11);
i) la première chambre partielle (41) peut être reliée par la soupape d'échappement (42, 44) à un raccord d'échappement d'air (23) de la soupape de commande de la pression de freinage.

3. Soupape de commande de la pression de freinage selon la revendication 2, caractérisée en ce qu'une douille (39) munie d'un perçage qui s'étend dans la direction de son axe longitudinal est disposée dans le poussoir creux (36) de manière réglage dans la direction de son axe longitudinal.
